# EUROPEAN PATENT APPLICATION

(11) **EP 3 706 201 A1**
(43) Date of publication of application: **09.09.2020**
(21) Application number: 17905037.2
(22) Date of filing: 12.05.2017
(51) Int. Cl.: H01M 2/22, H01R 13/52, C25B 1/04

(54) **CONNECTION FOR AN ELECTROLYSER STACK, SUITABLE FOR EXPLOSIVE ATMOSPHERES**

(71) Applicant: H2B2 Electrolysis Technologies, S.L., 28010 Madrid (ES)
(72) Inventor: RODRÍGUEZ FERNÁNDEZ, Emilio Jesús, 28010 Madrid (ES); ROMERO DEL POZO, Marta, 28010 Madrid (ES); BREY SÁNCHEZ, José Javier, 28010 Madrid (ES); MAYNAR MUÑOZ, María, 28010 Madrid (ES)
(74) Representative: Monzón de la Flor, Luis Miguel
(86) International application number: PCT/ES2017/070301
(87) International publication number: WO 2018/189410

(57) **Abstract**

Electrical connection for an electrolysis stack that comprises extensions (3) of the connection terminals (2) of a stack (1), a connection box (4) in which the extensions (3) of the terminals (2) are connected to output terminals (7), both terminals passing through sealed inlets (5), which can use insulating resins, and means for attaching the connection box (4) to the stack, which can consist of securing bars (6) arranged at an angle to hold the connections box (4) on the stack. The terminals are thus connected in an environment that prevents contact with an explosive atmosphere.

## Description

### PURPOSE OF THE INVENTION

As indicated by its title, the present invention relates to an electrical connection for an electrolyser stack, suitable for explosive atmosphere. An electrolyser is a system that breaks down water molecules by electrolysis to produce hydrogen and oxygen.

The electrical connection of an electrolysis stack is characterised by ensuring an efficient protection against potential explosions that may occur due to the atmosphere in which it is located.

Therefore, the present invention belongs to the field of electrolysers, more specifically electrolysis stacks, as well as to the field of connection boxes.

### BACKGROUND OF THE INVENTION

The stack is the part of an electrolyser where the water molecule is decomposed into hydrogen and oxygen. Water and a direct current flow through these devices resulting in the production of oxygen and hydrogen at the output thereof. The nature of these devices (hydrogen producers) and the location thereof makes them be classified as hazardous, and must therefore be considered as suitable for explosive atmospheres (ATEX).

This is problematic for these devices, as their electrical connections do not meet the minimum requirements for safe use in areas with this classification.

As they use direct current, these devices currently comprise two metal plates, one for the negative terminal and another one for the positive terminal. These terminals have a perforated end to allow connection by screws, while on the other end the terminal is connected to the cable or busbars, depending on the power of the stack.

The mere connection of these devices is hazardous itself, as during operation thereof when electric current is applied and water passes through the stack, vibrations occur that over time make the electrical connections looser than they were initially. Consequently, this can lead to sparks forming which, in contact with hydrogen, could cause an explosion.

Moreover, UNE Standard UNE-60079-10-1, which is a translation of international Standard IEC 60079-10-1, indicates that the safety principle that must be followed is eliminating the likelihood that a gaseous explosive atmosphere is present around an ignition source, and if it is not possible to ensure a null probability it is preferable to remove the ignition source.

Therefore, the aim of the present invention is to eliminate the probability of an explosion due to the presence of an explosive atmosphere in combination with electrical connections that can generate sparks, developing a connection as described below, the essence of which is indicated in claim one.

### DESCRIPTION OF THE INVENTION

The aim of the present invention is to develop an electrical connection for an electrolysis stack that minimises the likelihood of causing an explosion due to the joint presence of an explosive atmosphere and an ignition source caused by the electrical connection itself.

The connection that is the subject matter of the invention comprises extensions of the stack terminals, a connection box which in one possible embodiment comprises means for attachment to the stack; the connection box has a sealed inlet for the stack extensions and another sealed inlet for the connection terminals from the power supply.

If the stack terminals are separated, such as due to the size of the stack, the extensions of the stack terminals shall be designed such as to allow bringing said extensions near each other.

The sealing of the terminals in their inlet to the connection box can be provided by an insulating resin or any other functionally equivalent element.

The connection between the stack terminals and the outlet terminals takes place inside the connection box by any known means.

The features described above allow the connection of the terminals to take place in an environment that prevents contact with an explosive atmosphere, such as in the presence of hydrogen, of the sparks that may occur in the connection between the plates.

Unless indicated otherwise, all the technical and scientific elements used in this specification have the meaning usually understood by a person skilled in the art to which this invention belongs. In the practice of this invention, methods and materials similar or equivalent to those described in the specification may be used.

In the description and claims, the word "comprises" and its variants do not intend to exclude other technical characteristics, additives, components or steps. For persons skilled in the art, other objects, advantages and characteristics of the invention will be partly inferred from the description and partly from the practice of the invention.

### DESCRIPTION OF THE FIGURES

To complement the present description, and to help to better understand the characteristics of the invention according to a preferred practical embodiment thereof, the said description is accompanied, as an integral part thereof, by a set of drawings wherein the following has been represented in an illustrative and non-limiting manner:
Figure 1 shows a general view of the connection between the terminals of an electrolysis stack and the output terminals.

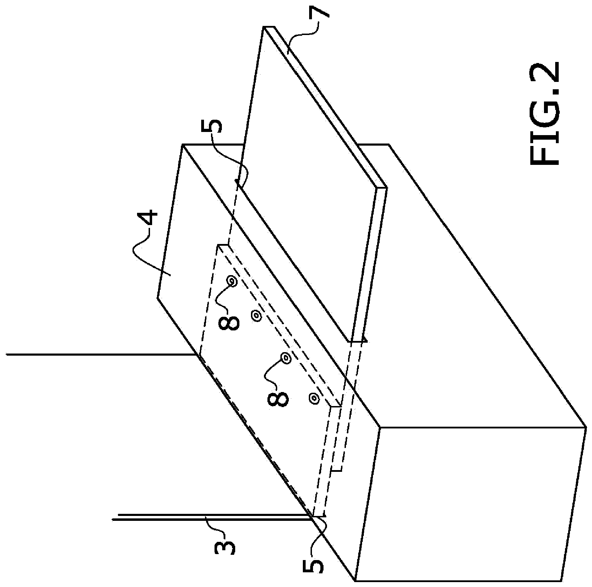

Figure 2 shows an enlarged view of the connection box used in the connection.

### PREFERRED EMBODIMENT OF THE INVENTION

In view of the figures, a preferred embodiment of the proposed invention is described below.

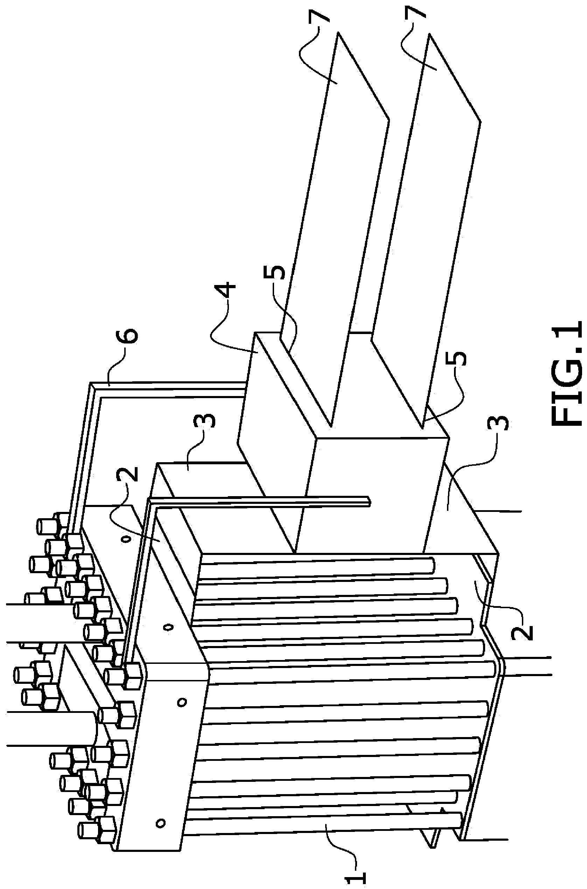

Figure 1 shows that the connection of the invention comprises:
- extensions (3) of the connection terminals (2) of a stack (1)
- a connection box (4) in which the extensions (3) of the terminals (2) are connected to the output terminals (7), both terminals passing through sealed inlets (5) appropriate for use in explosive atmospheres.
- means for attaching the connection box (4) to the stack.

The extensions (3) can have any shape or configuration and are meant to separate the explosive atmosphere from the connections. In addition, these extensions also allow bringing the stack terminals (2) closer to each other when they are very separated, as is the case when the stack is large.

Among the possible means for attaching the connection box (4) to the stack are securing bars (6) which are arranged at an angle to hold the connection box (4) on the stack.

The sealed inlets (5) of the connection box (4) can be provided by the use of insulating resins.

The connection between the two terminals, the terminals (2) of the stack (1) and the output terminals (7), occurs inside the connection box (4), which is suitable for explosive environments.

Having sufficiently described the nature of the present invention, in addition to the manner in which to put it into practice, it is hereby stated that, in its essence, it may be put into practice in other embodiments that differ in detail from that indicated by way of example, and to which the protection equally applies, provided that its main principle is not altered, changed or modified.

## Claims

1. Electrical connection of an electrolysis stack suitable for explosive atmospheres, **characterised in that** it comprises:
- extensions (3) of the connection terminals (2) of a stack (1)
- - a connection box (4) in which the extensions (3) of the terminals (2) are connected to output terminals (7), both terminals passing through sealed inlets (5)
- means for attaching the connection box (4) to the stack.

2. Electrical connection of an electrolysis stack suitable for explosive atmospheres according to claim 1, **characterised in that** the sealed inlets (5) use insulating resins.

3. Electrical connection of an electrolysis stack suitable for explosive atmospheres according to claim 1 or 2, **characterised in that** the means for attaching the connection box to the stack comprise securing bars (6) which are arranged at an angle to hold the connections box (4) on the stack.
